# EUROPEAN PATENT APPLICATION

(11) **EP 4 686 313 A1**
(43) Date of publication of application: **28.01.2026**
(21) Application number: 24775171.2
(22) Date of filing: 19.03.2024
(51) Int. Cl.: H04W 76/15, H04W 76/11, H04W 74/08, H04W 24/08, H04W 84/12

(54) **ENHANCED MULTI-LINK SINGLE-RADIO MODE-BASED INFORMATION TRANSMISSION AND RECEPTION METHOD AND DEVICE IN WIRELESS LAN SYSTEM**

(30) Priority: 21.03.2023 KR 20230036817
(71) Applicant: LG Electronics Inc., Yeongdeungpo-gu Seoul 07336 (KR)
(72) Inventor: JANG, Insun, Seoul 06772 (KR); CHOI, Jinsoo, Seoul 06772 (KR); BAEK, Sunhee, Seoul 06772 (KR)
(74) Representative: Plasseraud IP
(86) International application number: PCT/KR2024/003432
(87) International publication number: WO 2024/196123

(57) **Abstract**

Disclosed are an enhanced multi-link single-radio (EMLSR) mode-based information transmission and reception method and device in a wireless LAN system. A method performed by a STA belonging to a first MLD, according to one embodiment of the present disclosure, may comprise the steps of: receiving, from a STA belonging to a second MLD, a multi-link element related to the setup of a plurality of links; receiving, from the STA belonging to the second MLD, a control frame for initiating an EMLSR mode; and on the basis of the EMLSR mode, exchanging a frame with the STA belonging to the second MLD. Here, the multi-link element may include information on at least one link, from among the plurality of links, which is related to the EMLSR mode.

## Description

### [TECHNICAL FIELD]

The present disclosure relates to a method and device for transmitting and receiving information based on an enhanced multi-link single-radio (EMLSR) mode in a Wireless Local Area Network (WLAN) system.

### [BACKGROUND ART]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [Disclosure]

### [Technical Problem]

The technical object of the present disclosure is to provide a method and device for transmitting and receiving information based on an enhanced multi-link single-radio (EMLSR) mode in a wireless LAN system.

An additional technical object of the present disclosure is to provide a method and device for indicating link(s) related to the EMLSR mode in a wireless LAN system.

The technical objects to be achieved by the present disclosure are not limited to the above-described technical objects, and other technical objects which are not described herein will be clearly understood by those skilled in the pertinent art from the following description.

### [Technical Solution]

A method performed by a station (STA) affiliated with a first multi-link device (MLD) in a wireless LAN system according to an aspect of the present disclosure may comprise: receiving, from an STA affiliated with a second MLD, a multi-link element related to a setup of a plurality of links; receiving, from the STA affiliated with the second MLD, a control frame for initiating an enhanced multi-link single-radio (EMLSR) mode; and performing a frame exchange with the STA affiliated with the second MLD based on the EMLSR mode. Herein, the multi-link element may include information for at least one link related to the EMLSR mode among the plurality of links.

A method performed by a station (STA) affiliated with a second multi-link device (MLD) in a wireless LAN system according to an additional aspect of the present disclosure may comprise: transmitting, to an STA affiliated with a first MLD, a multi-link element related to a setup of a plurality of links; transmitting, to the STA affiliated with the first MLD, a control frame for initiating an enhanced multi-link single-radio (EMLSR) mode; and performing a frame exchange with the STA affiliated with the first MLD based on the EMLSR mode. Herein, the multi-link element may include information for at least one link related to the EMLSR mode among the plurality of links.

### [Technical Effects]

According to the present disclosure, a method and device for transmitting and receiving information based on an enhanced multi-link single-radio (EMLSR) mode in a wireless LAN system may be provided.

According to the present disclosure, a method and device for indicating link(s) related to the EMLSR mode in a wireless LAN system may be provided.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIG. 8 is a diagram illustrating an exemplary format of a trigger frame to which the present disclosure may be applied.
FIG. 9 illustrates an exemplary MLD structure to which the present disclosure may be applied.
FIG. 10 illustrates an exemplary structure of an ML element to which the present disclosure may be applied.
FIG. 11 illustrates an EMLSR mode-based operation to which the present disclosure may be applied.
FIG. 12 illustrates an EML capability subfield format included in a common info field within an ML element to which the present disclosure may be applied.
FIG. 13 illustrates an STA control field format and an STA info field format included in a per-STA profile subelement to which the present disclosure may be applied.
FIG. 14 illustrates information for an EMLSR link indicated/provided through a link info field according to an embodiment of the present disclosure.
FIG. 15 illustrates a detailed example of an EMLSR indication bitmap included in a link info field according to an embodiment of the present disclosure.
FIG. 16 illustrates information for an EMLSR link indicated/provided through a common info field according to an embodiment of the present disclosure.
FIG. 17 illustrates a detailed example of an EMLSR indication bitmap included in a common info field according to an embodiment of the present disclosure.
FIG. 18 illustrates an EML capability subfield within a common info field that includes information indicating that it is an EMLSR MLD according to an embodiment of the present disclosure.
FIG. 19 illustrates an operation flowchart by an STA belonging to a first MLD according to an embodiment of the present disclosure.
FIG. 20 illustrates an operation flowchart by an STA belonging to a second MLD according to an embodiment of the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

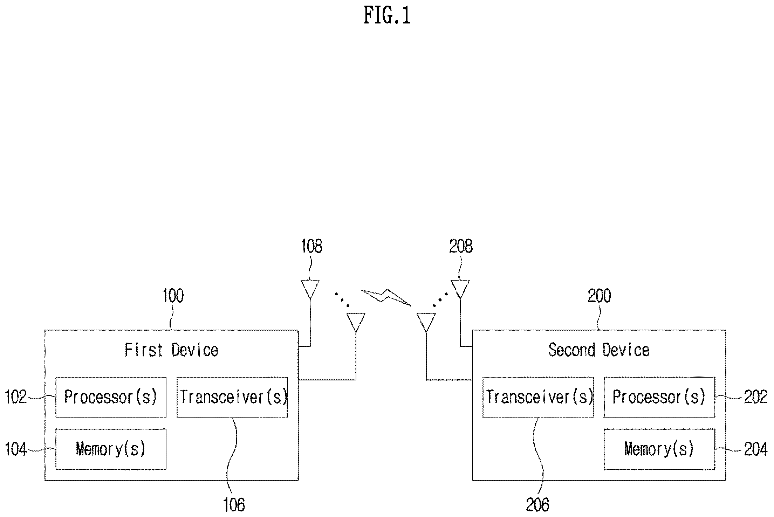

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

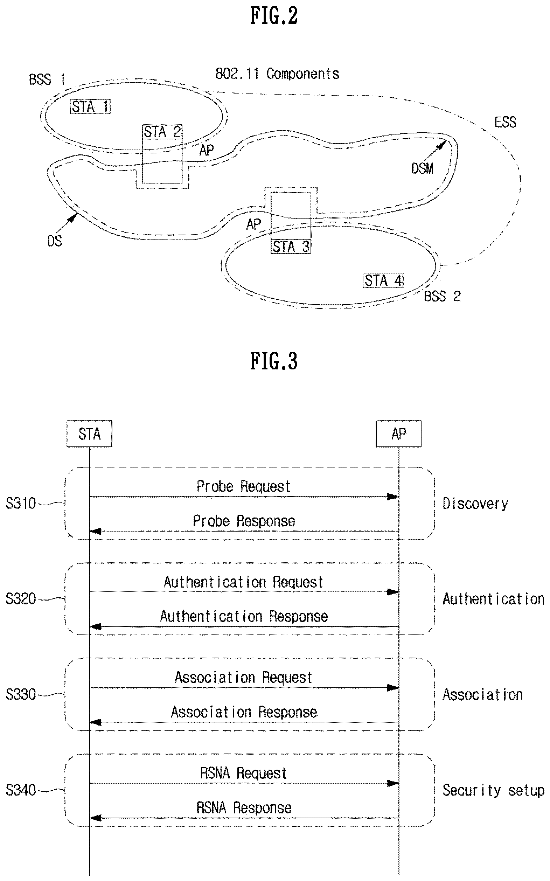

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

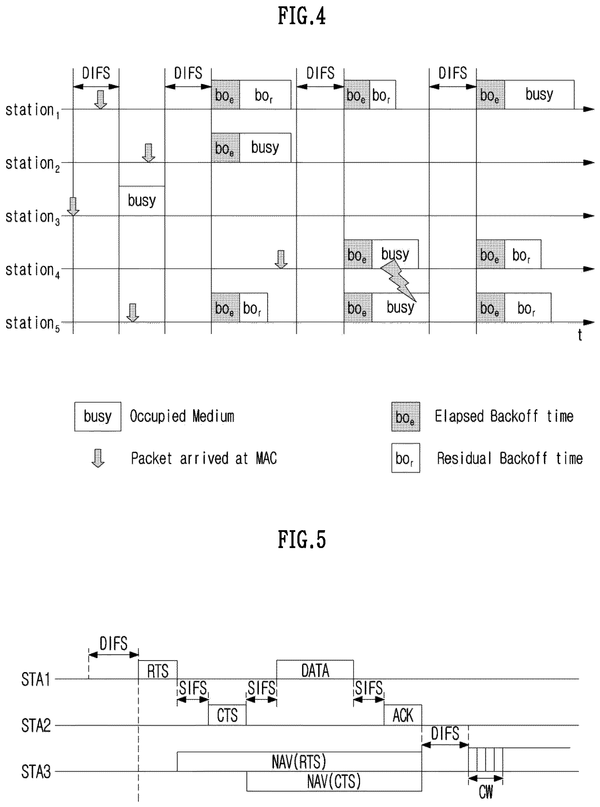

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

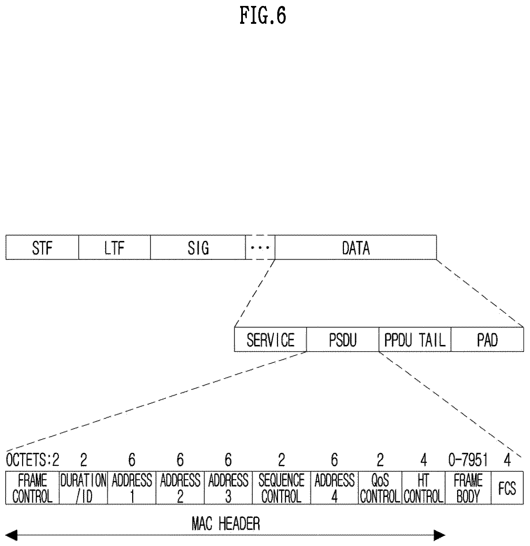

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

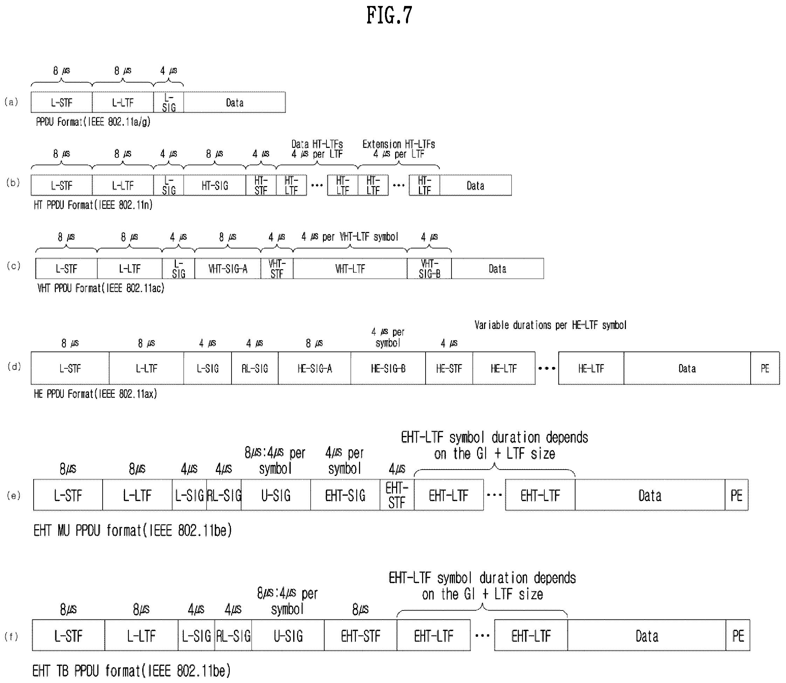

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

### Trigger frame

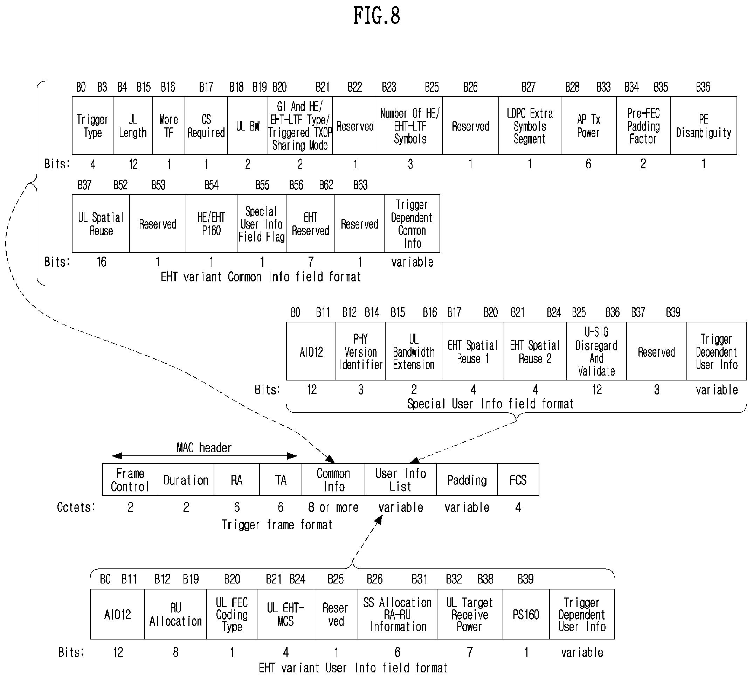

FIG. 8 is a diagram illustrating an exemplary format of a trigger frame to which the present disclosure may be applied.

A trigger frame may allocate resources for one or more TB PPDU transmissions and request TB PPDU transmissions. The trigger frame may also include other information required by an STA transmitting a TB PPDU in response thereto. The trigger frame may include common info and user info list fields in the frame body.

The common info field may include information that is common to one or more TB PPDU transmissions requested by a trigger frame, such as trigger type, UL length, presence of a subsequent trigger frame (e.g., More TF), whether channel sensing (CS) is required, UL bandwidth (BW), etc. Fig. 8 illustrates an example of an EHT variant common information field format.

The 4 bits trigger type subfield may have values from 0 to 15. Among them, the values 0, 1, 2, 3, 4, 5, 6, and 7 of the trigger type subfield are defined to correspond to basic, Beamforming Report Poll (BFRP), multi user-block acknowledgement request (MU-BAR), multi user-request to send (MU-RTS), Buffer Status Report Poll (BSRP), groupcast with retries (GCR) MU-BAR, Bandwidth Query Report Poll (BQRP), and NDP Feedback Report Poll (NFRP), respectively, and the values 8 to 15 are defined as reserved.

Among the common information, the trigger-dependent common info subfield may include information that is selectively included based on the trigger type.

A special user info field may be included within the trigger frame. The special user info field does not include user-specific information, but rather includes extended common information not provided in the common info field.

The user info list includes zero or more user info fields. FIG. 8 illustrates an example of an EHT variant user info field format.

The AID12 subfield basically indicates that it is a user information field for an STA having the corresponding AID. In addition, if the AID12 field has a predetermined specific value, it may be utilized for other purposes, such as allocating a random access (RA)-RU, or being configured in the form of a special user info field. The special user info field is a user info field that does not include user-specific information but includes extended common information that is not provided in the common info field. For example, the special user info field may be identified by the AID12 value of 2007, and the special user info field flag subfield within the common info field may indicate whether the special user info field is included.

The RU allocation subfield may indicate the size and location of the RU/MRU. For this purpose, the RU allocation subfield may be interpreted together with the primary/secondary 160MHz (PS160) subfield of the user info field, the UL BW subfield of the common info field, etc.

### Multi-link Operation

Hereinafter, a multi-link operation supported by a STA according to the present disclosure will be described.

A STA (an AP STA and/or a non-AP STA) described in the present disclosure may support multi link (ML) communication. ML communication may refer to communication supporting a plurality of links.

A link related to ML communication may include a channel (e.g., 20/40/80/160/240/320MHz channels) in a frequency band in which a STA operates (e.g., a 2.4GHz band, a 5GHz band, a 6GHz band, etc.). A plurality of links used for ML communication may be configured in various ways. For example, a plurality of links supported by one STA for ML communication may belong to the same frequency band or belong to a different frequency band. For example, a multi-link may include multi-band, i.e., a multi-link may represent links across multiple frequency bands, while simultaneously representing multiple links within a single frequency band.

In addition, each link may correspond to a frequency unit in a predetermined size (e.g., a channel, a subchannel, a RU, etc.). In addition, all or part of a plurality of links may be a frequency unit in the same size or may be a frequency unit in a different size.

When one STA supports a plurality of links, a transmitting or receiving device supporting each link may operate like one logical STA. In other words, a MLD refers to a device which has at least one affiliated STA as a logical entity and has a single MAC service access point (SAP) for one MAC data service and logical link control (LLC).

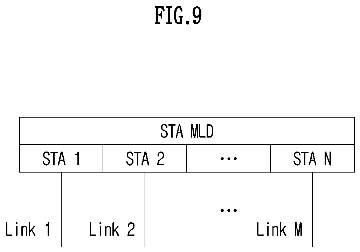

FIG. 9 illustrates an exemplary MLD structure to which the present disclosure may be applied.

Referring to FIG. 9 , an STA MLD may have one or more affiliated STAs (e.g., STA 1, STA 2, ..., STA N) and, in relation to these, may have one or more links (e.g., Link 1, Link 2, ..., Link M).

Here, the STA belonging to the STA MLD may correspond to a non-AP STA or an AP STA. In this regard, A non-AP MLD refers to a MLD that each STA affiliated with a corresponding MLD is a non-AP STA. A multi-radio non-AP MLD refers to a non-AP MLD that supports reception or exchange of a frame in at least one link at a time. An AP MLD refers to a MLD that each STA affiliated with a corresponding MLD is an AP STA.

A non-AP MLD refers to a MLD that each STA affiliated with a corresponding MLD is a non-AP STA. A multi-radio non-AP MLD refers to a non-AP MLD that supports reception or exchange of a frame in at least one link at a time. An AP MLD refers to a MLD that each STA affiliated with a corresponding MLD is an AP STA.

A multi-link operation (MLO) may enable a non-AP MLD to discover, authenticate and associate an AP MLD and set up a plurality of links. Based on a supported capability exchanged during an association procedure, each link may enable channel access and frame exchange between a non-AP MLD and an AP MLD. A STA affiliated with a MLD may select and manage its capability and operation parameter independently from other STA(s) affiliated with the same MLD.

Through a multi-link setup process, an AP MLD and/or a non-AP MLD may transmit or receive link-related information which may be supported by a corresponding MLD. Link-related information may include at least one of whether it is a simultaneous transmit and receive (STR) operation capable of simultaneous transmission or reception on a plurality of links or a non-simultaneous transmit and receive (NSTR) operation incapable of simultaneous transmission or reception, information on the number/upper limit of UL/DL links, information on a location/a band/a resource of an UL/DL link, information on a frame type (e.g., management, control, data) available or preferred in at least one UL/DL link, information on an ACK policy available or preferred in at least one UL/DL link or information on a traffic identifier (TID) available in at least one UL/DL link supported by a corresponding MLD.

An AP MLD (e.g., a NSTR mobile AP MLD) may configure one link among a plurality of links as a primary link. An AP MLD may perform a beacon frame, a probe response frame and a group addressed data frame only on a primary link. The remaining other link(s) of a plurality of links may be referred to as a non-primary link. An AP MLD operating on a non-primary link may operate not to transmit a beacon frame or a probe response frame. In addition, a non-AP MLD may perform frame exchange during authentication, (re)association and 4-way handshaking only on a primary link.

When at least one traffic identifier (TID) is mapped to a corresponding link through a multi-link setup process, a setup link may be defined as being enabled and when there is no TID mapped to a corresponding link, a setup link may be defined as being disabled. A TID should be always mapped to at least one setup link unless admission control is used. Basically, a TID is mapped to all setup links, so all setup links may be activated.

When a link is activated, a corresponding link may be used for frame exchange according to a power state of a non-AP STA operating in a corresponding link. Only a MSDU or an A-MSDU with a TID mapped to an active link may be transmitted in a corresponding link. A management frame and a control frame may be transmitted only in an active link.

When a link is deactivated, a corresponding link may not be used for frame exchange by including a management frame for both a DL and an UL.

In a multi-link setup process, activation/deactivation of each link may be indicated through TID-to-Link mapping. TID-to-Link mapping may be performed in a default mapping mode or/and a negotiation mapping mode.

One STA among STAs belonging to a MLD may provide information on at least one link other than its link for multi-link discovery (e.g., obtain information on a plurality of links including a corresponding link on one link) or multi-link setup (e.g., simultaneous association on a plurality of links through exchange between an association request/response frame on one link). To provide this information, a multi-link (ML) element may be defined.

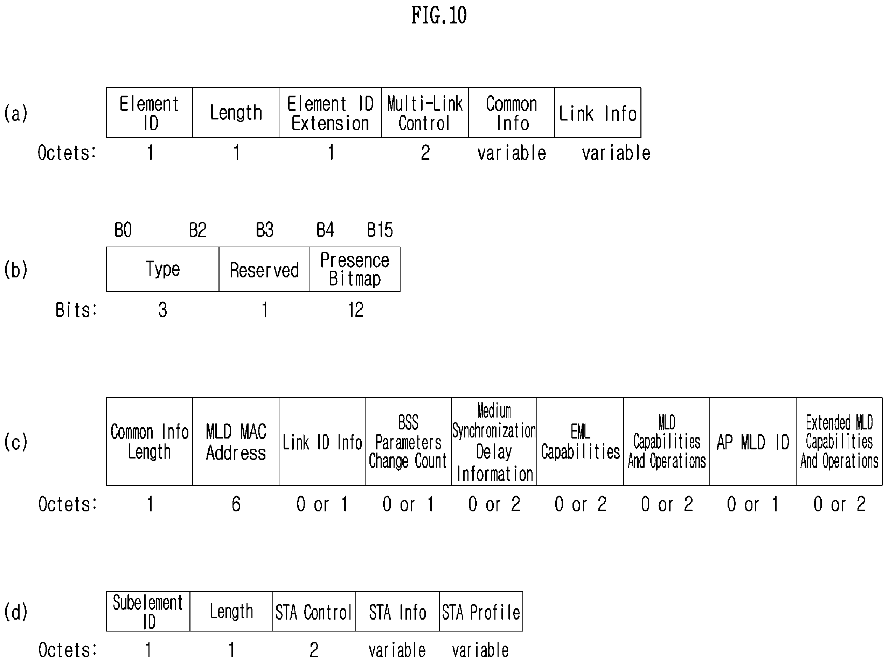

FIG. 10 exemplarily shows a structure of a ML element to which the present disclosure may be applied.

In a ML element (or a ML information element (IE)) of FIG. 10(a), an element ID field and an element ID extension field may have a specific value (e.g., 255 and 107) showing that they are a ML element and a length field may have a value showing a length of the remaining fields (e.g., an octet unit) excluding an element ID field and a length field.

FIG. 10(b) shows an exemplary format of a multi-link control field in FIG. 10(a). For example, a multi-link control field is defined as having a size of 2 octets and may include a 3-bit type subfield, a 1-bit reserved bit and a 12-bit presence bitmap subfield. A type subfield may have a value indicating one of types such as basic, a probe request, a reconfiguration, a tunneled direct-link setup (TDLS), priority access, etc. A presence bitmap subfield shows whether there are a variety of subfield(s) within a common information field and may be defined in a different format according to various variants (or types described above) of a ML element.

FIG. 10(c) shows an exemplary format of a common information field in FIG. 10(a). A common information field may contain information that is common to all links based on ML elements. A common information field may be defined as having a variable size. A common information length subfield may indicate the number of octets (including 1 octet of a common information length subfield) included in a common information field. A 6-octet MLD MAC address subfield may have a value specifying a MAC address of a MLD to which a STA transmitting a basic ML element belongs. In addition, a link ID information subfield, a BSS parameter change count subfield, a medium synchronization delay information subfield, an enhanced multi-link (EML) capability subfield, a MLD capabilities and operations subfield, an AP MLD ID subfield, an extended MLD capabilities and operations subfield, etc. may or may not be included in a common information field.

A link information field in FIG. 10(a) is defined as having a variable size, and may include link specific information and may exist optionally. The link information field may contain information that applies independently to each link based on the ML element. When a link information field exists, it may include at least one sub-element. The format and order of a sub-element may be defined in various ways. As an example of an optional sub-element ID for a basic variant ML element, 0, a value of a sub-element ID, corresponds to a name of a per-STA profile and is extensible, and 221, a value of a sub-element ID, corresponds to a vendor-specific name and whether it may be extended may be determined by a vendor, and 254, a value of a sub-element ID, corresponds to a name of a fragment and is not extensible, and the remaining values 1-220, 222-253 and 255 may be reserved.

FIG. 10(d) shows an exemplary format of a per-STA profile sub-element. A per-STA profile sub-element may include a 1-octet sub-element ID subfield, a 1-octet length subfield, a 2-octet STA control subfield, a variable-sized STA information subfield and a variable-sized STA profile subfield. A STA control subfield may include information such as a link ID, whether a complete profile is included, whether a STA MAC address exists, etc. A STA information subfield may include information such as a STA MAC address, etc. A STA profile subfield may include information included in a probe response or probe request frame body, information included in a (re)association response or (re)association request frame body, etc. according to whether a reported STA is an AP STA or a non-AP STA.

The format of a ML element in FIG. 10 is illustrative, and an order, a name, a size, etc. of a field/a subfield may be changed, an additional field/subfield may be further defined and some fields/subfields may be excluded. In other words, a common information field may include common information between STAs in a MLD, and a link information field may include specific information on each STA/link (e.g., in a per-STA profile sub-element including a link ID corresponding to a corresponding STA).

Link indication related to enhanced multi-link single-radio (EMLSR) mode

In relation to the aforementioned multi-link based operation, the present disclosure describes a specific method for indicating a link associated with the EMLSR mode.

With respect to the EMLSR mode, an STA MLD may perform a listening operation on multiple links as an initial operation. In this regard, a link with the EMLSR mode enabled may be referred to as an EMLSR link. Upon receiving an initial control frame (e.g., an MU-RTS trigger frame (TF), a BSRP TF, etc.) on a specific link through the listening operation, the STA MLD may perform frame exchange with another STA MLD using a single radio on the link.

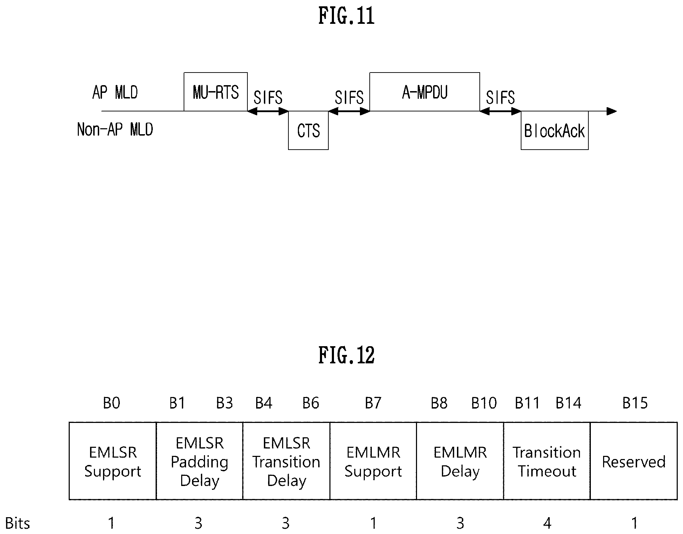

FIG. 11 illustrates an EMLSR mode-based operation to which the present disclosure may be applied.

Referring to FIG. 11, a non-AP MLD operating in EMLSR mode may perform listening operations on multiple links. Thereafter, the AP MLD may transmit an MU-RTS trigger frame, and the non-AP MLD may receive the MU-RTS trigger frame on one of the EMLSR links. In response, the non-AP MLD may transmit a CTS frame, i.e., a response frame for the MU-RTS trigger frame, to the AP MLD on the link. Thereafter, the non-AP MLD may perform frame exchange with the AP MLD on the link.

Information related to the aforementioned EMLSR mode may be provided through an ML element (e.g., the ML element illustrated in FIG. 10(a)).

For example, information related to the EMLSR mode may be provided through an EML Capabilities subfield included in a Common Info field within the ML element.

FIG. 12 illustrates an EML capability subfield format included in a common info field within an ML element to which the present disclosure may be applied.

Referring to FIG. 12, the EML capability subfield format may include information related to the EMLSR mode and information related to the enhanced multi-link multi-radio (EMLMR) mode. Specifically, the EML capability subfield format may include an EMLSR support subfield, an EMLSR padding delay subfield, an EMLSR transition delay subfield, an EMLMR support subfield, an EMLMR delay subfield, and a transition timeout subfield.

Here, the EMLSR Support subfield may indicate whether the MLD described in the ML element supports the EMLSR operation, and may consist of 1 bit. In addition, the EMLSR Padding Delay subfield may indicate the minimum MAC padding duration of the initial control preamble requested by the non-AP MLD. In addition, the EMLSR Transition Delay subfield may indicate the transition delay time required for the non-AP MLD to transition from a PPDU exchange operation on one of the activated links (i.e., a link with the EMLSR mode enabled) to a listening operation on the activated link. In addition, the Transition Timeout subfield may indicate a timeout value for the EML operating mode notification frame exchange in the EMLSR mode and the EMLMR mode.

That is, in the common info field within the ML element, information regarding whether the EMLSR operation is supported through the EML capability subfield, and if supported, specific information related to the EMLSR operation (e.g., EMLSR padding delay, etc.) may be provided.

Additionally, as described above, the Link Info field within the ML element may be composed of one or more Per-STA profile subelements (e.g., the Per-STA profile subelements illustrated in FIG. 10(d)).

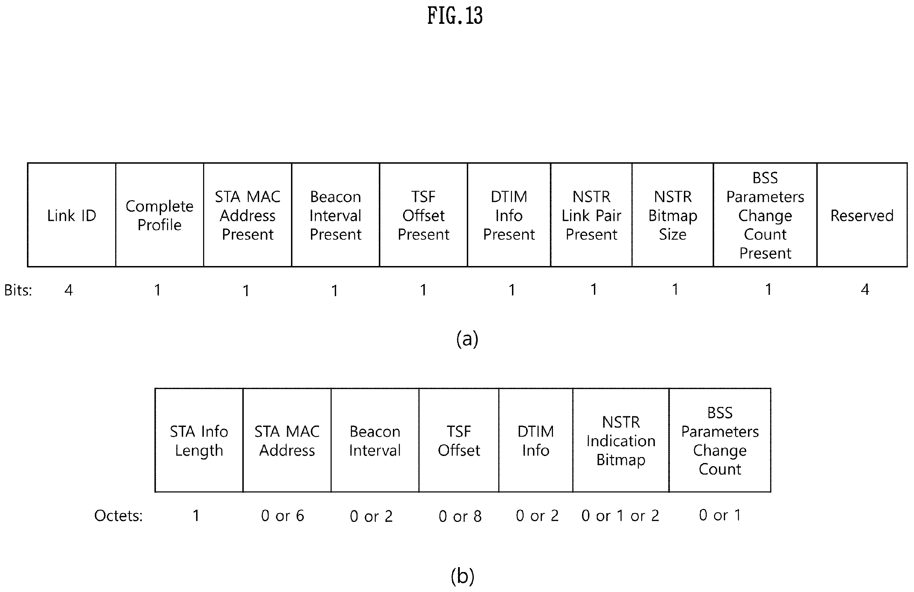

FIG. 13 illustrates an STA control field format and an STA info field format included in a Per-STA profile subelement to which the present disclosure may be applied.

Referring to FIG. 13(a), the STA control field format within the Per-STA profile sub-element may include a Link ID subfield, a Complete Profile subfield, a STA MAC address present subfield, a Beacon Interval Present subfield, a TSF Offset Present subfield, a DTIM Info Present subfield, a Non-Simultaneous Transmit and Receive (NSTR) Link Pair Present subfield, an NSTR Bitmap Size subfield, and a BSS Parameters Change Count Present subfield.

Referring to FIG. 13(b), the STA info field format within the Per-STA profile sub-element may include a STA info length subfield, a STA MAC address subfield, a beacon interval subfield, a TSF offset subfield, a DTIM info subfield, an NSTR indication bitmap subfield, and a BSS parameters change count subfield.

At this time, each Per-STA profile may be mapped to information for each link using a link ID. In particular, each Per-STA profile may indicate information for whether the link pair operates in the NSTR operation/mode through bitmap information (e.g., NSTR indication bitmap) when the link configures a link pair with another link. For example, a bit in the bitmap information being set to '1' may indicate that the link pair corresponds to an NSTR link pair operating in the NSTR operation/mode, and a bit in the bitmap information being set to '0' may indicate that the link pair corresponds to an STR link pair operating in the STR operation/mode. Additionally, if the bitmap information does not exist in the per-STA profile, it may mean that all link pairs operate in the STR operation/mode.

In this regard, when performing a multi-link setup procedure, i.e., exchanging an assotication request/response frame, information for an STR link pair and an NSTR link pair is indicated through the ML element of each frame, but information for an EMLSR link (and/or an EMLSR link pair) is not indicated. The EMLSR link(s) for the EMLSR operation as described above may be indicated simultaneously with EMLSR mode enablement through an EML operation mode notification (OMN) frame after the multi-link setup procedure.

Therefore, since the EMLSR link may not always operate as the STR operation/mode in which frame exchange may be performed simultaneously on multiple links regardless of the listening operation in the EMLSR operation, ambiguity may arise. That is, for a link pair indicated as the STR operation/mode in the multi-link setup procedure, an STA MLD that knows the link pair as being for the STR operation/mode may not perform basic listening operations until the EMLSR mode is activated. That is, since an STA MLD having a link set that may only operate in the EMLSR mode may not operate in the STR operation/mode until the EMLSR mode is activated, the STA MLD may not properly/appropriately perform frame exchange.

To address the aforementioned issues, the present disclosure proposes, through detailed examples, a method for indicating/providing information for a link for EMLSR operation/mode (hereinafter referred to as an EMLSR link).

In the embodiments of the present disclosure, detailed names may be replaced/changed with other names, and an STA may include an AP STA or a non-AP STA.

### Embodiment 1

This embodiment relates to a method for indicating/providing information for an EMLSR link through a Link Info field within an ML element.

To this end, a new EMLSR indication bitmap field may be defined. For example, the EMLSR indication bitmap field may be utilized, such as the NSTR indication bitmap field of the Link Info field within an ML element.

The EMLSR indication bitmap may be defined to indicate whether the link indicating the bitmap (i.e., the link indicated by the link ID included in the STA control field in the ML element) and the link corresponding to each bit constituting the bitmap may operate only in the EMLSR mode. Specifically, the bits constituting the EMLSR indication bitmap may indicate a pair/set of the link indicating the bitmap and the links supporting the EMLSR mode. For example, if the value of at least one bit among the multiple bits constituting the EMLSR indication bitmap is set to a specific value (e.g., a value of '1'), a pair/set consisting of the link indicating the EMLSR indication bitmap and at least one other link corresponding to the at least one bit can correspond to a pair/set of links supporting only the EMLSR mode.

That is, since the links consisting of each link pair according to the indicated bit may only operate as EMLSR links, frame exchange shall always be initiated through an initial control frame in the listening operation.

In this regard, for a link pair indicated as an EMLSR link through the aforementioned EMLSR indication bitmap (e.g., a link pair indicated by a specific value (e.g., a value of '1') in the EMLSR indication bitmap), the value for the corresponding link pair in the NSTR indication bitmap may be ignored.

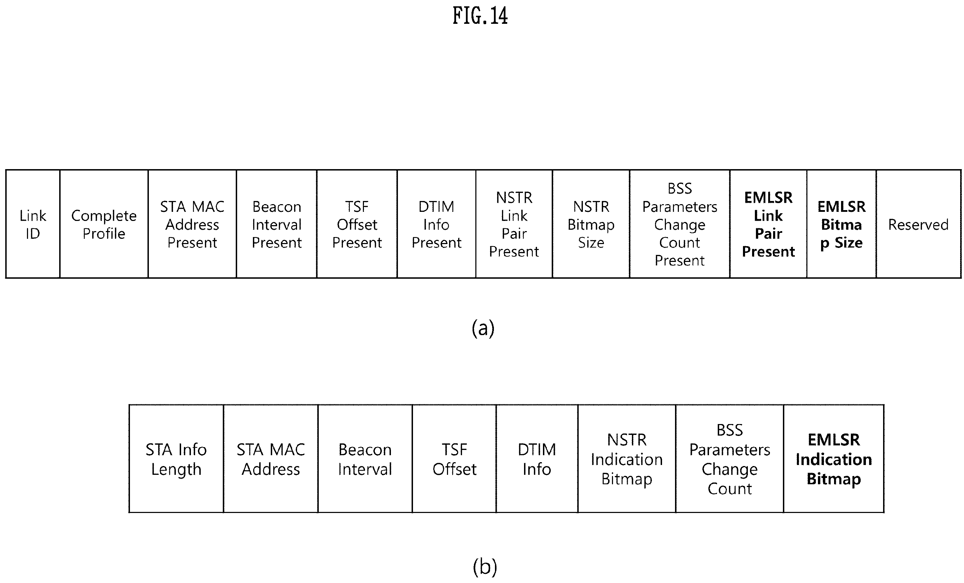

FIG. 14 illustrates information for an EMLSR link indicated/provided through a link info field according to an embodiment of the present disclosure.

Referring to FIG. 14(a), the STA control field format illustrated in FIG. 13(a) may be supplemented with an EMLSR Link Pair Present subfield indicating the presence of an EMLSR link pair (i.e., the presence of an EMLSR indication bitmap), and an EMLSR Bitmap Size subfield indicating the size of the EMLSR bitmap.

In this regard, the EMLSR Bitmap Size subfield may be defined to indicate whether it is 1 octet or 2 octets, but is not limited thereto. Furthermore, considering cases where the EMLSR link is implemented with a limited number of links, the EMLSR Bitmap Size subfield may be defined to indicate 2 bits, 4 bits, etc.

Referring to FIG. 14(b), the EMLSR indication bitmap field described above may be added to the STA info field format illustrated in FIG. 13(b).

In this regard, if the MLD receiving the corresponding ML element is a single-radio MLD, the EMLSR indication bitmap field may not be present. In the case of a single-radio MLD, the EMLSR indication bitmap is unnecessary because the value of the Maximum Number of Simultaneous Links subfield of the MLD Capabilities And Operations subfield included in the common info field in the ML element is 0. Additionally or alternatively, the EMLSR indication bitmap field may not be present even if there is no link operating in EMLSR mode.

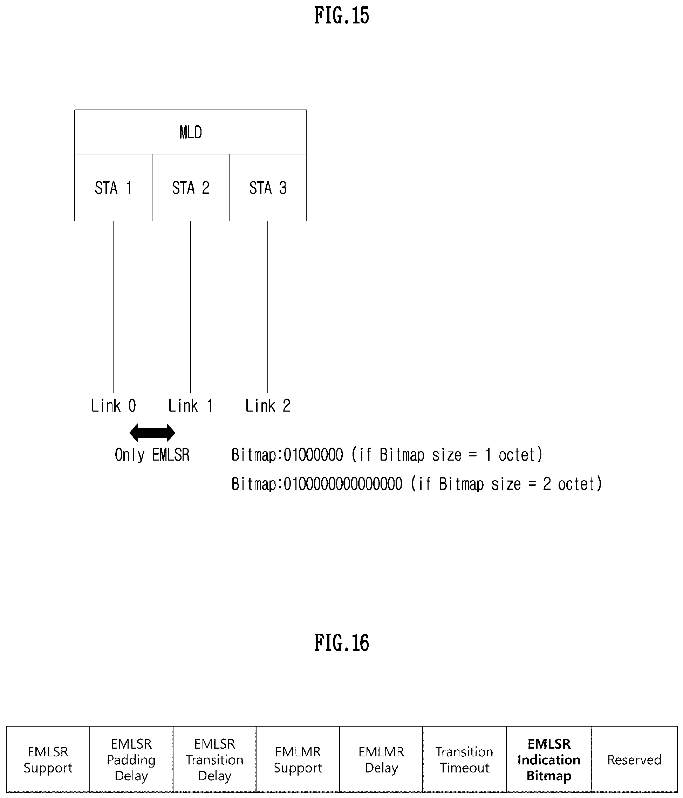

FIG. 15 illustrates a detailed example of an EMLSR indication bitmap included in a link info field according to an embodiment of the present disclosure.

Referring to FIG. 15, the MLD may operate on three links (i.e., link 0, link 1, and link 2), and it is assumed that it may only operate in EMLSR mode on links 0 and 1.

In this case, the EMLSR indication bitmap is based on the Per-STA Profile of link 0. For example, in the EMLSR indication bitmap, the first bit (e.g., Bit 0) may be associated with link 0, the second bit (e.g., Bit 1) may be associated with link 1, and the third bit (e.g., Bit 2) may be associated with link 2.

Specifically, in the example illustrated in FIG. 15, the second bit corresponding to the link pair consisting of link ID 0 and link ID 1 in the EMLSR indication bitmap may indicate a specific value (e.g., a value of '1'). For example, if the size of the EMLSR indication bitmap is indicated as 1 octet, the bitmap may be expressed as "010000000." As another example, if the size of the EMLSR indication bitmap is indicated as 2 octets, the bitmap may be expressed as "0100000000000000."

In this regard, the operation in the link pair consisting of link 0 and link 2 may be determined by the NSTR indication bitmap field in the STA info field format. Furthermore, even if information regarding the relationship between link 0 and link 1 is indicated by the NSTR indication bitmap, the information may be ignored based on the EMLSR indication bitmap.

### Embodiment 2

This embodiment relates to a method for indicating/providing information for an EMLSR link through a common info field within an ML element.

The method proposed in Embodiment 1 may incur significant overhead since information for the EMLSR link is indicated through each Per-STA profile. To reduce this overhead, a method for indicating/providing information for the EMLSR link through a common info field within an ML element may be considered.

For this purpose, an EMLSR indication bitmap field may be newly defined. Here, the size of the EMLSR indication bitmap field may be predefined to a certain value (e.g., 1 octet, 2 octets, etc.).

Only the EMLSR mode may be operated between the links indicated by the EMLSR indication bitmap. In other words, the bitmap may be defined to indicate a set of links that may only operate in the EMLSR mode. For example, if the value of at least one bit among the multiple bits constituting the EMLSR indication bitmap is set to a specific value (e.g., '1'), a link set consisting of at least one link corresponding to the at least one bit may correspond to a link set that only supports the mode.

In the case of the EMLSR indication bitmap described in Embodiment 1, each bit may indicate/indicate whether one link and another link (i.e., a link pair) may operate only in EMLSR mode. In contrast, the EMLSR indication bitmap described in Embodiment 2 may indicate that only the links indicated with a specific value (e.g., a value of '1') may operate only in EMLSR mode, rather than indicating each link pair.

That is, since a set of links according to the indicated bit (e.g., links indicated with a value of '1') may only operate as EMLSR links, frame exchange shall always be initiated through an initial control frame in the listening operation.

In this regard, for link(s) indicated as EMLSR links via the EMLSR indication bitmap (e.g., link(s) indicated with a value of '1' in the EMLSR indication bitmap), the value for the corresponding link(s) in the NSTR indication bitmap may be ignored.

The EMLSR indication bitmap may be included as a subfield within the common info field. Additionally or alternatively, the EMLSR indication bitmap may be included within the EML Capabilities subfield or the Extended MLD Capabilities And Operations subfield within the common info field. In this case, to reduce overhead, information regarding the EMLSR bitmap size, as in Embodiment 1, may be included in the common info field together with the EMLSR indication bitmap.

FIG. 16 illustrates information for an EMLSR link indicated/provided through a common info field according to an embodiment of the present disclosure.

Referring to FIG. 16, for the EML Capabilities subfield format illustrated in FIG. 12, an EMLSR instruction bitmap field as described above may be added.

In this regard, if the MLD receiving the corresponding ML element is a single-radio MLD, the EMLSR indication bitmap field may not be present. In the case of a single-radio MLD, the EMLSR indication bitmap is unnecessary because the value of the Maximum Number Of Simultaneous Link subfield of the MLD Capabilities And Operations subfield included in the common info field in the ML element is 0. Additionally or alternatively, the EMLSR indication bitmap field may not be present even if the EMLSR mode is not supported. Additionally or alternatively, the presence or absence of the EMLSR indication bitmap field may be indicated through a field indicating the presence or absence as in Embodiment 1 (e.g., the EMLSR Link Pair Present subfield).

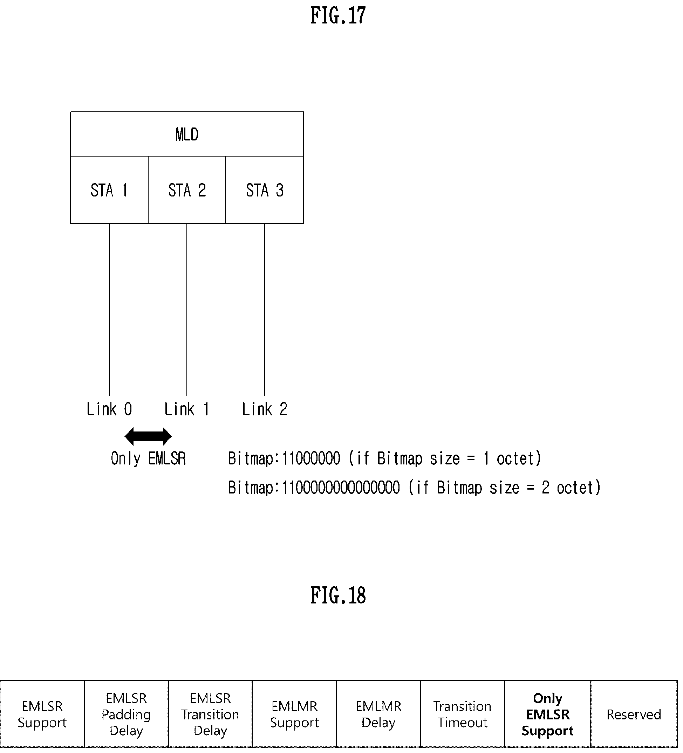

FIG. 17 illustrates a detailed example of an EMLSR indication bitmap included in a common info field according to an embodiment of the present disclosure.

Referring to FIG. 17, the MLD may operate on three links (i.e., link 0, link 1, and link 2), and it is assumed that it may only operate in EMLSR mode on links 0 and 1.

For example, in the EMLSR indication bitmap, the first bit (e.g., Bit 0) may be associated with link 0, the second bit (e.g., Bit 1) may be associated with link 1, and the third bit (e.g., Bit 2) may be associated with link 2.

Specifically, in the example illustrated in FIG. 17, the first bit and the second bit corresponding to link ID 0 and link ID 1 in the EMLSR indication bitmap may indicate a specific value (e.g., a value of '1'). For example, if the size of the EMLSR indication bitmap is defined/indicated as 1 octet, the corresponding bitmap may be expressed as "110000000." As another example, if the size of the EMLSR indication bitmap is defined/indicated as 2 octets, the corresponding bitmap may be expressed as "1100000000000000."

In this regard, the operation in a link pair consisting of link 0 and link 2, and a link pair consisting of link 1 and link 2, may be determined by the NSTR indication bitmap field in the STA info field format. Additionally, even if information for the relationship between link 0 and link 1 is indicated by the NSTR indication bitmap, that information may be ignored based on the EMLSR indication bitmap.

### Embodiment 3

This embodiment relates to a method for indicating that a specific MLD corresponds to an EMLSR MLD in a multi-link-based operation.

Here, the EMLSR MLD may refer to an STA MLD in which all STAs belonging to the STA MLD are configured/indicated to operate only in EMLSR mode on the link in which they operate.

FIG. 18 illustrates an EML capability subfield within a common info field that includes information indicating that it is an EMLSR MLD according to an embodiment of the present disclosure.

Referring to FIG. 18, an Only EMLSR Support subfield may be newly defined and indicate whether all STAs affiliated with/included in the MLD may operate only in EMLSR mode on the link. For example, the Only EMLSR Support subfield may be composed of 1 bit.

Additionally or alternatively, although FIG. 18 illustrates that the Only EMLSR Support subfield is included in the EML Capability subfield within the Common Info field, the Only EMLSR Support subfield may be included in another subfield within the Common Info field.

Additionally or alternatively, the Only EMLSR Support subfield may be present/included together with the EMLSR Indication Bitmap subfield described above in the present disclosure. In this case, if the Only EMLSR Support subfield indicates that the EMLSR MLD corresponds to (e.g., if the Only EMLSR Support subfield is set to a value of '1'), the EMLSR Indication Bitmap subfield may not be present.

### Embodiment 4

This embodiment relates to a method for defining rules for EMLSR operation.

Specifically, the following operations may be pre-defined/configured as rules related to the EMLSR mode.

### (Rule 1)

If an MLD is indicated/set to support EMLSR mode (e.g., EMLSR Support = 1) in the EML Capability subfield within the ML element, the MLD that is aware of this situation may transmit initial control frames (e.g., MU-RTS trigger frame, BSRP trigger frame, etc.) to the MLD that supports EMLSR mode on all activated links that are set up. Based on this, frame exchange between the MLDs may be initiated. That is, since the EMLSR mode is supported regardless of the information by the NSTR indication bitmap, frame exchange is not performed right away. However, the operation according to the rule may degrade the performance on links that may operate as STR.

### (Rule 2)

Based on the EMLSR indication bitmap described above in the present disclosure (e.g., the EMLSR indication bitmap in embodiments 1/2/3), that is, information for a link that must operate only in EMLSR mode, at least one of the following operations may be performed.

For example, in a link that shall operate only in EMLSR mode, one or more frames may not be transmitted after the information is indicated until the EMLSR mode is activated.

As another example, frame exchange may be performed using one or more links that are required to operate in EMLSR mode only (e.g., an EMLSR indication bitmap) and not all links that are required to operate in EMLSR mode only before EMLSR mode is activated. Additionally, information related to the operation may be indicated. For example, a link ID for a specific link capable of frame exchange may be indicated. Additionally or alternatively, a link capable of performing frame exchange may be indicated using additional link bitmap information. For example, in the MLD structure illustrated in FIG. 17, if the link capable of performing frame exchange is link 1, and the bitmap size is defined/set to 1 octet, additional link bitmap information '01000000' may be additionally indicated in the common info field.

Hereinafter, transmission and reception operations of an STA according to the aforementioned embodiment of the present disclosure will be described. Here, STA may correspond to a non-AP STA or an AP, and may correspond to an STA affiliated to an MLD based on a multi-link.

A first MLD supporting the EMLSR mode may transmit a first PPDU to a second MLD, the first PPDU including information on whether one or more links (among multiple links) being operated may operate only in the EMLSR mode.

In this regard, the first PPDU may be transmitted during an association phase or a subsequent phase. For example, the first PPDU may be included in an association request/response frame.

Additionally or alternatively, the information may be included in a multi-link (ML) element. In this regard, the information may be included in a Common Info field within the ML element. For example, a link bitmap (e.g., an EMLSR link indication bitmap) may be used to set the bit(s) corresponding to link(s) that operate only in EMLSR mode to '1'. Additionally or alternatively, the information may be included in a per-STA profile corresponding to each link in the Link Info field within the ML element. For example, a per-STA profile of link 1 may include a link bitmap that consists of one or more bits indicating pairs between link 1 and each other link (e.g., an EMLSR link indication bitmap). Here, each bit may be set to a value of '1' to indicate that a link pair consisting of link 1 and one other link may operate only in EMLSR mode.

In this regard, the first MLD that transmitted the first PPDU may not transmit one or more frames/PPDUs on one or more links that operate only in the EMLSR mode before the EMLSR mode is activated.

Additionally or alternatively, the first MLD that transmitted the first PPDU may transmit one or more PPDUs/frames using at least one, but not all, of the one or more links that operate only in the EMLSR mode before the EMLSR mode is activated. For example, if link 1 and link 2 are links that operate only in the EMLSR mode, the frame/PPDU may be transmitted using only link 1 before the EMLSR mode is activated.

Additionally or alternatively, the first PPDU may include information for links that may transmit one or more PPDUs/frames before the EMLSR mode is activated among links that operate only in the EMLSR mode. The information may be indicated/provided in the form of an additional link bitmap. For example, a bit for a link that may transmit one or more PPDUs/frames may be set to a value of '1' in the bitmap.

The second MLD may receive a first PPDU from the first MLD that includes information on whether the link(s) being operated may operate only in the EMLSR mode.

In this regard, the second MLD that received the first PPDU may not transmit one or more frames/PPDUs to the first MLD on one or more links that operate only in the EMLSR mode that the first MLD indicated before the EMLSR mode was activated.

Additionally or alternatively, the second MLD that receives the first PPDU may transmit one or more frames/PPDUs to the first MLD using at least one link, but not all links, among the links that operate only in the EMLSR mode indicated by the first MLD before the EMLSR mode is activated. For example, if Link 1 and Link 2 of the first MLD are links that operate only in the EMLSR mode, the frame/PPDU may be transmitted to the first MLD using only Link 1 before the EMLSR mode is activated.

Additionally or alternatively, the second MLD may receive, from the first PPDU received from the first MLD, information for links that may transmit one or more PPDUs/frames to the first MLD among the links that operate only in the EMLSR mode indicated by the first MLD before the EMLSR mode is activated.

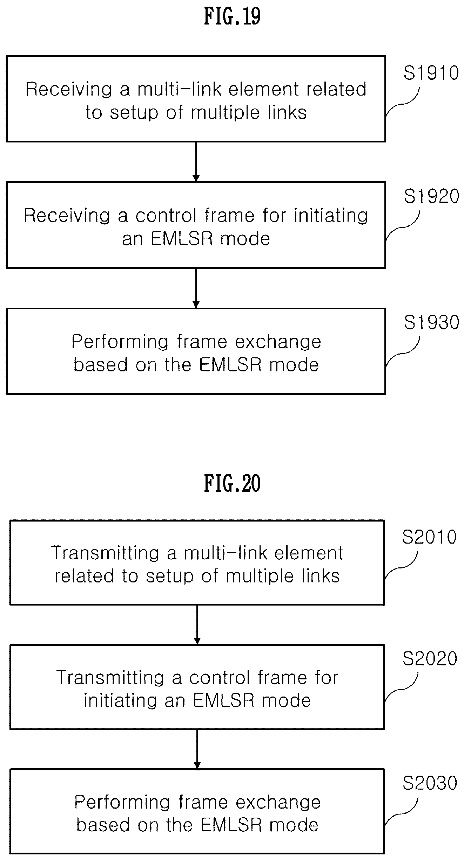

Hereinafter, the operation of an STA according to the aforementioned embodiment of the present disclosure will be described with reference to FIGS. 19 and 20 .

That is, the examples in FIGS. 19 and 20 may correspond to some of the various examples of the present disclosure. For example, in FIGS. 19 and 20 , an STA affiliated with the first MLD may be an STA transmitting an ML element including information for a link associated with the EMLSR mode, and an STA affiliated with the second MLD may be an STA receiving the ML element. For example, an STA affiliated with the first MLD may be a non-AP STA affiliated with a non-AP MLD, and an STA affiliated with the second MLD may be an AP affiliated with an AP MLD.

FIG. 19 illustrates an operation flowchart by an STA belonging to a first MLD according to an embodiment of the present disclosure.

Referring to FIG. 19, an STA affiliated with a first MLD may receive a multi-link element (e.g., see FIG. 10 ) related to the setup of multiple links (e.g., a multi-link setup procedure) from an STA affiliated with a second MLD (S1910).

For example, the multi-link element may be transmitted via a probe response frame, an ML probe response frame, an association response frame, a reassociation response frame, etc. In other words, the multi-link element may be included in a response frame to a request frame (e.g., a probe request frame, an ML probe request frame, an association request frame, a reassociation request frame, etc.) in which an STA affiliated with the first MLD requests an STA affiliated with the second MLD to perform multi-link setup.

In this regard, the multi-link element may include information for at least one link associated with the EMLSR mode among the multiple links.

For example, information for at least one link associated with the EMLSR mode may be included in a common information field within a multi-link element (e.g., see FIGS. 10 and 16 ).

Specifically, the information may include bitmap information (e.g., an EMLSR indication bitmap included in the common information field) indicating at least one link among multiple links that may operate only in the EMLSR mode. In this regard, the information may be included in an enhanced multi-link (EML) capability subfield within the common information field.

For example, information for at least one link associated with the EMLSR mode may be included in a link information field within a multi-link element.

Specifically, the information may include bitmap information (e.g., an EMLSR indication bitmap included in the link information field) indicating a link pair between a link indicated by the link information field and a link that may only operate in the EMLSR mode. In this regard, the bitmap information may be included in an STA information field (e.g., see FIGS. 10 and 14) within a per-STA profile subelement configuring the link information field. Additionally, the STA control field within the aforementioned per-STA profile subelement may include at least one of a first subfield indicating whether a corresponding link pair exists (e.g., an EMLSR link pair presence subfield illustrated in FIG. 14) or a second subfield indicating a size of the corresponding bitmap information (e.g., an EMLSR bitmap size subfield illustrated in FIG. 14).

After the setup procedure for multiple links as described above (e.g., multi-link setup procedure) is completed, the STA affiliated with the first MLD may receive a control frame for initiating the EMLSR mode (e.g., the initial control frame described above in the present disclosure) from the STA affiliated with the second MLD (S1920).

In this regard, reception of the control frame may be performed based on a listening operation on at least one link related to the EMLSR mode.

After the procedure based on the aforementioned control frame (e.g., receiving the control frame and/or transmitting a response frame to the control frame), the STA affiliated with the first MLD may perform frame exchange with the STA affiliated with the second MLD based on the EMLSR mode (S1930).

In relation to the procedure described above in FIG. 19, for at least one link related to the EMLSR mode, the STA affiliated with the first MLD may be configured to ignore information by the non-simultaneous transmit and receive (NSTR) indication bitmap included in the multi-link element.

Additionally or alternatively, the multi-link element may be defined to further include information indicating that the aforementioned multiple links support only the EMLSR mode (e.g., the Only EMLSR Support subfield illustrated in FIG. 18).

The method performed by the STA affiliated with the first MLD described in the example of FIG. 19 may be performed by the first device (100) of FIG. 1. For example, one or more processors (102) of the first device (100) of FIG. 1 may be configured to receive a multi-link element from an STA (200) affiliated with the second MLD via one or more transceivers

(106), receive a control frame for initiating the EMLSR mode from the STA (200) affiliated with the second MLD, and perform frame exchange with the STA (200) affiliated with the second MLD based on the EMLSR mode. Furthermore, one or more memories (104) of the first device (100) may store instructions for performing the method described in the example of FIG. 19 or the examples described above when executed by one or more processors (102).

FIG. 20 illustrates an operation flowchart by an STA belonging to a second MLD according to an embodiment of the present disclosure.

Referring to FIG. 20, an STA affiliated with a second MLD may transmit a multi-link element (e.g., see FIG. 10) related to the setup of multiple links (e.g., a multi-link setup procedure) to an STA affiliated with a first MLD (S2010).

In this regard, the multi-link element may include information for at least one link among the multiple links related to the EMLSR mode.

After the setup procedure (e.g., the multi-link setup procedure) for multiple links is completed, an STA affiliated with the second MLD may transmit a control frame (e.g., an initial control frame described above in the present disclosure) for initiating the EMLSR mode to an STA affiliated with the first MLD (S2020).

After the procedure based on the control frame described above (e.g., receiving the control frame and/or transmitting a response frame to the control frame), the STA affiliated with the second MLD may perform frame exchange with the STA affiliated with the first MLD based on the EMLSR mode (S2030).

Details/examples regarding information for at least one link related to the EMLSR mode included in the multi-link element, the control frame for initiating the EMLSR mode, information related to support of the EMLSR mode, etc. are the same as those described in the example of FIG. 19, and therefore, redundant descriptions are omitted.

The method performed by the STA affiliated with the second MLD described in the example of FIG. 20 may be performed by the second device (200) of FIG. 1. For example, one or more processors (202) of the second device (200) of FIG. 1 may be configured to transmit a multi-link element to the STA (100) affiliated with the first MLD via one or more transceivers (206), transmit a control frame for initiating an EMLSR mode to the STA (200) affiliated with the first MLD, and perform frame exchange with the STA (200) affiliated with the first MLD based on the EMLSR mode. Furthermore, one or more memories (204) of the second device (200) may store commands for performing the method described in the example of FIG. 20 or the examples described above when executed by one or more processors (202).

In the existing wireless LAN system, only STR link or NSTR link is defined to be indicated when performing the multi-link setup procedure. That is, information for links related to the EMLSR mode is not indicated in the multi-link setup procedure, and information for links related to the EMLSR mode is indicated only through the subsequent procedure, the EML Operation Mode Notification frame exchange. The EMLSR mode is disabled by default, and therefore, it is not defined how each link pair can operate before being enabled. On the other hand, information for links related to the EMLSR mode according to various examples of the present disclosure is indicated within the multi-link setup procedure, thereby achieving a new effect of efficiently utilizing the EMLSR mode during the EMLSR mode enable/disable process.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

A method proposed by the present disclosure is mainly described based on an example applied to an IEEE 802.11-based system, 5G system, but may be applied to various WLAN or wireless communication systems other than the IEEE 802.11-based system.

## Claims

1. A method performed by a station (STA) affiliated with a first multi-link device (MLD) in a wireless LAN system, the method comprising:
receiving, from an STA affiliated with a second MLD, a multi-link element related to a setup of a plurality of links;
receiving, from the STA affiliated with the second MLD, a control frame for initiating an enhanced multi-link single-radio (EMLSR) mode; and
performing a frame exchange with the STA affiliated with the second MLD based on the EMLSR mode,
wherein the multi-link element includes information for at least one link related to the EMLSR mode among the plurality of links.

2. The method of Claim 1, wherein:
a reception of the control frame is performed based on a listening operation on the at least one link.

3. The method of Claim 1, wherein:
information for the at least one link is included in a common information field in a multi-link element.

4. The method of Claim 3, wherein:
the information for the at least one link includes bitmap information indicating at least one link operable only in the EMLSR mode among the plurality of links.

5. The method of Claim 3, wherein:
the information for the at least one link is included in an enhanced multi-link (EML) capability subfield in the common information field.

6. The method of Claim 1, wherein:
the information for the at least one link is included in a link information field in the multi-link element.

7. The method of Claim 6, wherein:
the information for the at least one link includes bitmap information indicating a link pair between a link indicated by the link information field and a link operable only in the EMLSR mode.

8. The method of Claim 7, wherein:
the bitmap information is included in a STA information field in a per-STA profile subelement configuring the link information field.

9. The method of Claim 8, wherein: a STA control field in the per-STA profile subelement includes at least one of a first subfield indicating whether the link pair is present or a second subfield indicating a size of the bitmap information.

10. The method of Claim 1, wherein:
for the at least one link related to the EMLSR mode,
the STA affiliated with the first MLD is configured to ignore information by a non-simultaneous transmit and receive (NSTR) indication bitmap included in the multi-link element.

11. The method of Claim 1, wherein:
the multi-link element is defined to be further capable of including information indicating that the plurality of links support only the EMLSR mode.

12. A device for a station (STA) affiliated with a first multi-link device (MLD) in a wireless local area network (WLAN) system, the device comprising:
at least one transceiver; and
at least one processor connected to the at least one transceiver,
wherein the at least one processor is configured to:
receive, from an STA affiliated with a second MLD, a multi-link element related to a setup of a plurality of links;
receive, from the STA affiliated with the second MLD, a control frame for initiating an enhanced multi-link single-radio (EMLSR) mode; and
perform a frame exchange with the STA affiliated with the second MLD based on the EMLSR mode,
wherein the multi-link element includes information for at least one link related to the EMLSR mode among the plurality of links.

13. A method performed by a station (STA) affiliated with a second multi-link device (MLD) in a wireless LAN system, the method comprising:
transmitting, to an STA affiliated with a first MLD, a multi-link element related to a setup of a plurality of links;
transmitting, to the STA affiliated with the first MLD, a control frame for initiating an enhanced multi-link single-radio (EMLSR) mode; and
performing a frame exchange with the STA affiliated with the first MLD based on the EMLSR mode,
wherein the multi-link element includes information for at least one link related to the EMLSR mode among the plurality of links.

14. A device for a station (STA) affiliated with a second multi-link device (MLD) in a wireless local area network (WLAN) system, the device comprising:
at least one transceiver; and
at least one processor connected to the at least one transceiver,
wherein the at least one processor is configured to:
transmit, to an STA affiliated with a first MLD, a multi-link element related to a setup of a plurality of links;
transmit, to the STA affiliated with the first MLD, a control frame for initiating an enhanced multi-link single-radio (EMLSR) mode; and
perform a frame exchange with the STA affiliated with the first MLD based on the EMLSR mode,
wherein the multi-link element includes information for at least one link related to the EMLSR mode among the plurality of links.

15. A processing unit configured to control a station (STA) in a wireless local area network (WLAN) system, the processing unit comprising:
at least one processor; and
at least one computer memory operably connected to the at least one processor, and based on being executed by the at least one processor, storing instructions for performing a method according to any one claim of Claim 1 to Claim 11.

16. At least one non-transitory computer-readable medium storing at least one instruction, wherein:
the at least one instruction controls a device to perform a method according to any one claim of Claim 1 to Claim 11 in a wireless local area network (WLAN) system by being executed by at least one processor.
